Europäisches Patentamt

(19) European Patent Office

Office européen des brevets

(11) Publication number: **0 320 849 B1**

## (12) EUROPEAN PATENT SPECIFICATION

(45) Date of publication of patent specification :
**16.10.91 Bulletin 91/42**

(51) Int. Cl.⁵ : **B01J 20/04, B01D 15/08, G01N 30/48, B01J 20/32**

(21) Application number : **88120728.6**

(22) Date of filing : **12.12.88**

(54) Apatite packing for liquid chromatography and process for producing the same.

(30) Priority : **12.12.87 JP 314420/87**

(43) Date of publication of application :
**21.06.89 Bulletin 89/25**

(45) Publication of the grant of the patent :
**16.10.91 Bulletin 91/42**

(84) Designated Contracting States :
**DE GB SE**

(56) References cited :
**EP-A- 0 217 614**
**EP-A- 0 274 608**
**DE-A- 3 722 102**
**JOURNAL OF LIQUID CHROMATOGRAPHY, vol. 9, no. 16, 1986, pages 3543-3557, Marcel Dekker, Inc.; T. KADOYA et al.: "A new spherical hydroxyapatite for high performance liquid chromatography of proteins"**

(56) References cited :
**CHEMICAL ABSTRACTS, vol. 90, 1979, page 57, abstract no. 97707e, Columbus, Ohio, US; F.D. BABCOCK et al.: "The reaction of stannous fluoride and hydroxyapatite", & J. DENT. RES. 1978, 57(9-10), 933-8**
**Kokubyo Gakkai Zasshi 27 (4) 303-311 (1970)(Engl.Trans.)**
**Transaction of 39th Colloid and Interface Chemistry Symposium pp 342-343, 1986, Japan**

(73) Proprietor : **ASAHI KOGAKU KOGYO KABUSHIKI KAISHA**
**36-9, Maeno-cho 2-Chome Itabashi-ku Tokyo 174 (JP)**

(72) Inventor : **Fujinuma, Satoshi**
**c/o Asahi Kogaku Kogyo Kabushiki Kaisha 36-9,Maeno-cho 2-chome Itabashi-ku Tokyo (JP)**
Inventor : **Ojima, Satoshi**
**c/o Asahi Kogaku Kogyo Kabushiki Kaisha 36-9,Maeno-cho 2-chome Itabashi-ku Tokyo (JP)**

(74) Representative : **Hansen, Bernd, Dr.rer.nat. et al**
**Hoffmann, Eitle & Partner Patentanwälte Arabellastrasse 4 Postfach 81 04 20 W-8000 München 81 (DE)**

## Description

## FIELD OF THE INVENTION

The present invention relates to the use of an apatite packing for liquid chromatography, and more specifically, to the use of such a packing in liquid chromatography for separation and purification of proteins, enzymes, nucleic acids, etc..

## BACKGROUND OF THE INVENTION

Generally employed packing material for liquid chromatography include silica gel, chemically modified silica gel, synthetic high polymer gels, naturally ocurring high polymer gels, carbon gel, and the like.

Hydroxyapatite represented by formula $Ca_{10}(PO_4)_6(OH)_2$ has been used as a packing for liquid chromatography for separating high molecular weight biocompounds, such as proteins, nucleic acids, sugars, glycosides, etc. because of its excellent biocompatibility.

The hydroxyapatite packing shows both cation exchanging ability and anion exchanging ability to proteins, etc., while exhibiting high ability in separation of glycosides in the normal phase mode using acetonitrile and water as a eluent. Owing to such characteristics, a single column packed with hydroxyapatite can be applied to separation of a variety of substances. Further, since the desired substance can be separated under mild elution conditions, the sample under chromatography is protected from deactivation. Furthermore, the column has a high recovery. Therefore, with developments in the biological industry, hydroxyapatite has been regarded as one of the most promising packings for chromatography. That is, hydroxyapatite is an apatite compound which has previously been used as a packing for liquid chromatography, as described in Journal of Liquid Chromatography, vol. 9(16), pages 3543 to 3557 (1986).

However, the hydroxyapatite packing is poor in resistance to dissolution in acidic solutions, sometimes failing to fulfil its function. That is, when an acidic mobile phase is passed through a column packed with hydroxyapatite for a long period of time, crystals of hydroxyapatite are dissolved out and fine crystals released from the surface of packing particles and obstruct the passage of the mobile phase, eventually rendering the packing useless. Therefore, the conventional hydroxyapatite packing is not suitable for separation processes under acidic conditions. Particularly at a pH of 5.5 or less, such packing cannot be used continuously, and thus the range of substances which can be separated using hydroxyapatite is naturally limited.

Apatite containing at least one of tin and lead has been reported, as described in Transaction of 39th Colloid and Interface Chemistry Symposium, pages 342 to 343, held on October 6 to 8, 1986 at Ibaraki, Japan. However, its application to chromatography has not yet been established.

EP-A-0217614 discloses a calcium-phosphate type hydroxyapatite for chromatographic separation. Chemical Abstracts, Vol. 90, 1979, abstract no. 97707e discloses reacting a slurry of $SnF_2$ and hydroxyapatite to prepare an apatite incorporating tin.

Reference is also directed to co-pending applications EP-A-0298503, EP-A-0311963 and EP-A-0320998 which are concerned with chromatography methods which make use of a column packing based upon various apatite derivatives.

## SUMMARY OF THE INVENTION

An object of this invention is to provide a liquid chromatographic method utilising an apatite packing having improved acid resistance while maintaining the advantages of conventional hydroxyapatite packings, and which exhibits high performance for separating a wide range of substances.

Other objects and effects of the present invention will be apparent from the following description.

The above objects of the present invention have been attained by the use of an apatite packing for chromatography comprising particles having at least on the surface thereof apatite containing at least one of tin and lead.

## BRIEF DESCRIPTION OF DRAWING

Fig. 1A is a chromatogram obtained in Example 1 and Fig. 1B is a chromatogram obtained in Example 2.

Fig. 2A is a chromatogram obtained in Example 3 and Fig. 2B is a chromatogram obtained in Example 4.

Fig 3A is a chromatogram obtained in Comparative Example 1 and Fig. 3B is a chromatogram obtained in Comparative Example 2.

## DETAILED DESCRIPTION OF THE INVENTION

The apatite containing at least one of tin and lead used in the present invention can be produced by a synthetic method including a wet method and a dry method or an ion exchanging method.

When the apatite containing at least one of tin and lead used in the present invention is produced by the wet method, (1) phosphoric acid or a water soluble phosphate, (2) a calcium compound and (3) a water-soluble lead compound and/or a water-soluble tin compound are reacted in an aqueous solution in a suitable amount proportion. When the dry method is employed, (1) a phosphoric acid compound, (2) a calcium compound and (3) a lead compound and/or a tin compound are reacted at a high temperature in a suitable proportion.

The wet method can be conducted according, e.g., to Ann. Chem. (Paris), vol. 7, 808 to 832 (1952); J. Res. Nat. Bur. Stand., vol. 72A, 773 (1968) ; and Archs. Oral. Biol., vol. 23, 329 to 336 (1978). The dry method can be conducted according, e.g., to Arch. Intern. Physiol. Biochim., vol.72, 337 (1964) ; Chem. Abstr., vol. 60, 15418a (1964) ; and Studii Cercetari Chim., col. 13, 157 (1962).

In the case of the ion exchanging method, hydroxyapatite particles capable of being used as a packing for chromatography are immersed in an aqueous solution containing a water-soluble lead compound and/or a water-soluble tin compound.

Examples of the water-soluble lead compound include lead chloride, lead fluoride, etc. Examples of the water-soluble tin compound include tin chloride, tin fluoride, etc.

Examples of the embodiments used in the present invention include the following :

(1) a packing comprising the apatite containing at least one of tin and lead throughout the individual particles, (2) a packing comprising apatite particles of which surface is the apatite containing at least one of tin and lead, and (3) a packing comprising inert carrier particles coated with the apatite containing at least one of tin and lead.

The term "apatite" used herein means not only hydroxyapatite but also other apatite compounds including chlorinated apatite and fluorinated apatite.

In the above embodiment (1), the whole of the individual particles is formed of the apatite containing at least one of tin and lead and preferably has a porosity of from 0 to 50% and a specific surface area of from about 0.01 to 20 $m^2/g$. The porosity can be controlled by changing the calcining temperature or the density of the particle forming material.

In the above embodiments (2) and (3), the thickness of the surface layer of apatite containing at least one of tin and lead is preferably about 1 $\mu m$ or more. The porosity and the specific surface area of the packing are preferably from 0 to 50% and from about 0.01 to 20 $m^2/g$, respectively.

The above embodiment (1) in which the whole of the individual particles is formed of the apatite containing at least one of tin and lead can be prepared by heat-treating an agglomerate of the particles of the apatite containing at least one of tin and lead prepared by the above methods at a suitable temperature.

The above embodiment (2) in which the surface of apatite particles is the apatite containing at least one of tin and lead can be prepared by immersing and stirring an agglomerate of apatite particles in an aqueous solution containing a water-soluble lead compound and/or a water soluble tin compound, and then drying and heat-treating at a suitable temperature.

The immersing and stirring is generally carried out under acidic conditions at a temperature of from 5 to 90°C for from 0.5 to 10 hours.

The above embodiment (3) in which inert carrier particles such as alumina are coated with the apatite containing at least one of tin and lead can be prepared by sputtering or the like methods, as described.

The packing particles used in liquid chromatography according to the present invention are not particularly limited in size, shape, porosity, etc. However, performances such as separating ability can be assured by following a general particle design for packings for liquid chromatography. For example, the packing preferably has an average particle diameter of from about 1 to 100 $\mu m$, more particularly from about 10 to 100 $\mu m$ for industrial use and from about 1 to 10 $\mu m$ for use in analyses. If the average particle size is less than about 1 $\mu m$, the pressure drop on passing a liquid sample through a column packed with the packing becomes too large. If it exceeds about 100 $\mu m$, the surface area of the packing per unit volume is too small to assure separating ability. The packing preferably has a shape near to a spherical form in order to obtain stable separation characteristics while preventing cracks or cutouts, although particles having a macadamized form may be used. The porosity is preferably high in view of the load of the samples, but non-porous packing may be used, for example, for analytical purposes. The specific surface area is preferably from about 0.01 to 20 $m^2/g$, although it may be varied depending on the form of the packing particles.

The packing utilized in the present invention can be used for a method for liquid chromatography by sequentially (a) packing a column with the packing of the present invention, (b) contacting the packing with a sample comprising at least one solute, and (c) contacting the packing with a liquid mobile phase to separate the solute by elution.

Upon carrying out the method for liquid chromatography, the preferred eluents are as follows: In an ion exchanging mode, (1) a sodium phosphate buffer (pH 5 to 9), (2) a potassium phosphate buffer, (3) a mixture of a sodium chloride solution and various buffers (e.g., tris buffer, pipes buffer, etc.) and (4) a mixture of a potassium chloride solution and varous buffers (e.g., tris buffer, pipes buffer, etc.). In the cases of (1) and (2), a gradient elution at a concentration of from 10-100 mM to 1 M is preferred. In a normal mode, an isocratactic elution with the acetonitrile/water ratio of from about 7/3 to 9/1, and a gradient elution while increasing the water concentration are preferred.

The packing used in liquid chromatography according to the present invention can be suitably applied to separation of solutes such as proteins (e.g., monoclonal antibody and fibronectin), enzymes (e.g., ligase and protease), nucleic acids, (e.g., nucleotide, oligonucleotide, DNA and RNA), glycosides (ginsenoside, steviside, rebaudioside and saponin), and so on and exhibits stable separation performance even in an acidic solution, e.g., phosphoric acid, hydrochloric acid, etc. having a pH of 3 or more.

The present invention is now illustrated in greater detail with reference to the following Example and Comparative Example, but the present invention is not to be construed as being limited thereto.

Unless otherwise indicated, all parts, percents, ratios and the like are by weight.

## EXAMPLE 1

### (1) Preparation of Sn-containing apatite

2.26 g of stannous chloride and 6.28 g of stannous fluoride were dissolved in 2 $\ell$ of water. 12 g of an agglomerate of spherical hydroxyapatite particles was added to the solution obtained so as to be reacted for 2 hours while adjusting the pH to 3.0. The resulting reaction product was filtered and dried to obtain a powderous packing usable according to the present invention. The formation of Sn-containing apatite by the above procedures was confirmed by X-ray diffractiometry, atomic-absorption spectroscopy, etc.

### (2) Chromatography

The thus-obtained packing was filled in a stainless steel column having a diameter of 7.5 mm and a height of 100 mm. A sample solution containing a phosphoric acid buffer solution (pH = 6.8) having dissolved therein 10 $\mu g/\mu\ell$ of bovine serum albumin, 1.25 $\mu g/\mu\ell$ of lysozyme, and 5 $\mu g/\mu\ell$ of cytochrome C was passed through the column.

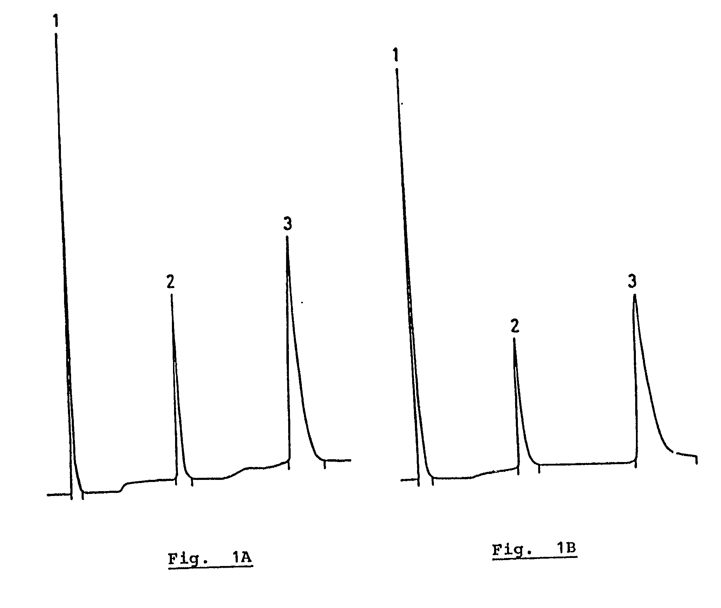

Elution was made by a linear gradient method at a flow rate of 1.0 m$\ell$/min for 30 minutes by using a sodium phosphate buffer (pH = 6.8) having a concentration of from 0.01 to 0.4 M as an elvent so as to obtain a chromatogram shown in Fig. 1A.

In Figs. 1A, 1B, 2A, 2B, 3A and 3B, peak 1 is the peak of bovine serum albumin, peak 2 is the peak of lysozyme, and peak 3 is the peak of cytochrome C.

## EXAMPLE 2

After passing through a column filled with the packing prepared in Example 1 a sodium phosphate buffer having a pH of 4.0 and a concentration of 0.4 M at a flow rate of 1.0 m$\ell$/min for 5 hours, the sample solution used in item (2) of Example 1 was separated in the same manner as in item (2) of Example 1 so as to obtain a chromatogram shown in Fig. 1B.

As is clear from Figs. 1A and 1B, when the Sn-containing apatite packing was used according to the present invention, no peak splitting occured even after a 0.4 M sodium phosphate buffer having a pH of 4.0 was passed for 5 hours. Thus, high separation performance was attained.

## EXAMPLE 3

### (1) Preparation of Pb-containing apatite

27.8 g of lead chloride was dissolved in 2 $\ell$ of water. 15 g of an agglomerate of spherical hydroxyapatite particles was added to the solution obtained so as to be reacted for 2 hours while adjusting the pH to 3.0. The resulting reaction product was filtered and dried to obtain a powderous packing usable according to the present invention. The formation of Pb-containing apatite by the above procedures was confirmed by X-ray diffractiometry, atomic-absorption spectroscopy, etc.

### (2) Chromatography

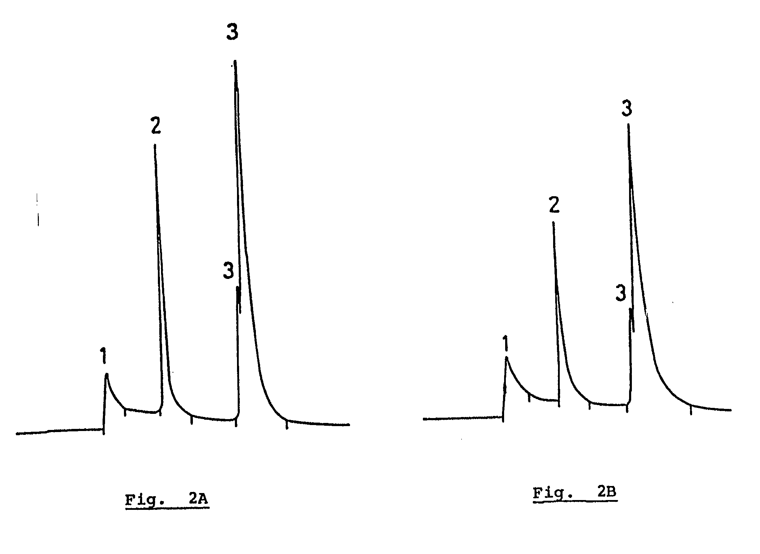

The thus-obtained packing was filled in a stainless steel column having a diameter of 7.5 mm and a height of 100 mm. The sample solution used in item (2) of Example 1 was separated in the same manner as in item (2) of Example 1 so as to obtain a chromatogram shown in Fig. 2A.

## EXAMPLE 4

After passing through a column filled with the packing prepared in Example 3 a sodium phosphate buffer having a pH of 4.0 and a concentration of 0.4 M at a flow rate of 1.0 m$\ell$/min for 5 hours, the sample solution used in item (2) of Example 1 was separated in the same manner as in item (2) of Example 1 so as to obtain a chromatogram shown in Fig. 2B.

As is clear from Figs. 2A and 2B, when the Pb-containing apatite packing was used according to the present invention, no peak splitting occured even after a 0.4 M sodium phosphate buffer having a pH of 4.0 was passed for 5 hours. Thus, high separation performance was attained.

## COMPARATIVE EXAMPLE 1

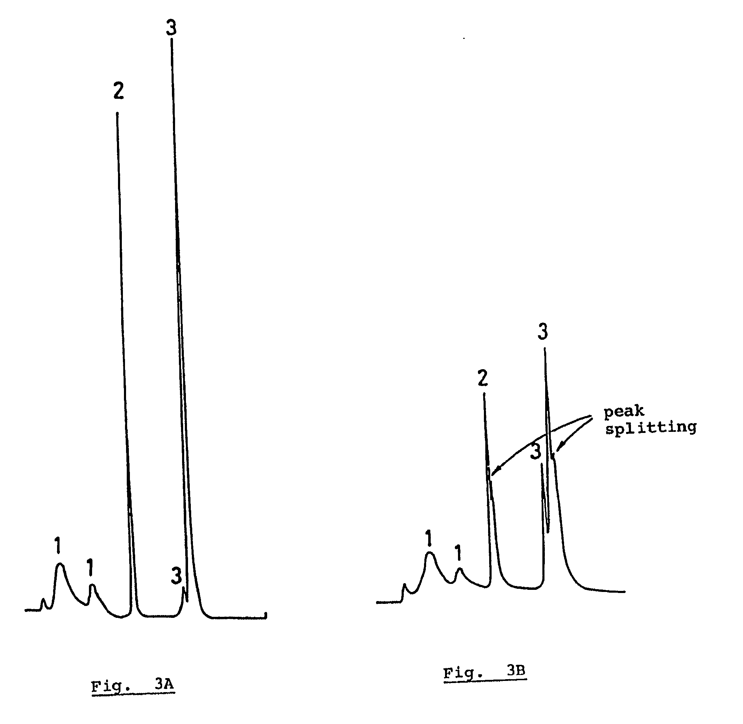

The same procedures as in item (2) of Example 1 were repeated except that a conventional hydroxyapatite packing was used instead of the packing usable in the present invention according to Example 1 so as to obtain a chromatogram shown in Fig. 3A.

## COMPARATIVE EXAMPLE 2

After passing through the column a 0.4 M sodium phosphate buffer having a pH of 4.0 for 1 hours, the same procedures as in Comparative Example 1 were repeated so as to obtain a chromatogram shown in Fig. 3B.

As is clear from Figs. 3A and 3B, when the conventional hydroxyapatite packing was used, peak splitting caused by the deterioration of the column occured after a 0.4 M sodium phosphate buffer having a pH of 4.0 was passed for 1 hours.

As described above, the packing for liquid chromatography usable according to the present invention has excellent acid resistance while maintaining high separation performance of conventional hydroxyapatite packings, and does not deteriorate even after passing an acidic solution. Therefore, this packing can be used stably for separating various compounds, particularly proteins, enzymes, nucleic acids, sugar, glycosides, etc., even in an acidic region for a long period of time.

## Claims

1. The use of an apatite packing for chromatography comprising particles having at least on the surface thereof apatite containing at least one of tin and lead.

2. The use according to claim 1, wherein the average diameter of said packing is from 1 to 100 μm.

3. The use according to claim 1, wherein the whole of the particles of said packing is formed of said apatite containing at least one of tin and lead.

4. The use according to claim 1, wherein said packing comprises apatite particles having on the surface thereof said apatite containing at least one of tin and lead.

5. The use according to claim 1, wherein said packing comprises inert carrier particles coated with said apatite containing at least one of tin and lead.

6. A method for liquid chromatography comprising the steps of :

(a) packing a column with an apatite packing containing at least one of tin and lead ;

(b) contacting said packing with a sample comprising at least two solutes ; and

(c) contacting said packing with a liquid mobile phase to separate said solutes by elution.

7. A method for liquid chromatography as claimed in claim 6, wherein said solutes are selected from proteins, enzymes, nucleic acids and glycosides.

8. A method for liquid chromatography as claimed in claim 6, wherein said method for liquid chromatography is conducted at a pH of 3 or more.

## Patentansprüche

1. Verwendung einer Apatitfüllung für die Chromatografie, umfassend Teilchen, die zumindest auf der Oberfläche Apatit haben, der mindestens eines aus der Gruppe aus Zinn und Blei enthält.

2. Verwendung nach Anspruch 1, wobei der Durchschnittsdurchmesser dieser Füllung zwischen 1 und 100 μm liegt.

3. Verwendung nach Anspruch 1, wobei sämtliche Teilchen dieser Füllung aus dem Apatit gebildet sind, der mindestens eines aus der Gruppe aus Zinn und Blei enthält.

4. Verwendung nach Anspruch 1, wobei die Füllung Apatitteilchen enthält, die auf der Oberfläche Apatit haben, der mindestens eines aus der Gruppe Zinn und Blei enthält.

5. Verwendung nach Anspruch 1, wobei die Füllung inerte Trägerteilchen umfasst, die mit dem Apatit überzogen sind, der mindestns eines aus der Gruppe aus Zinn und Blei enthält.

6. Verfahren der Flüssigchromatografie, umfassend die Schritte :

(a) Füllen einer Säule mit einer Apatitfüllung, die mindestens eines aus der Gruppe aus Zinn und Blei enthält ;

(b) Inberührungbringen dieser Füllung mit einer Probe, die mindestens zwei gelöste Stoffe enthält ; und

(c) Inberührungbringen dieser Füllung mit einer flüssigen, beweglichen Phase, um diese gelösten Stoffe durch Elution zu trennen.

7. Verfahren der Flüssigchromatografie nach Anspruch 6, bei dem die gelösten Stoffe ausgewählt sind aus Proteinen, Enzymen, Nukleinsäuren und Glycosiden.

8. Verfahren der Flüssigchromatografie nach Anspruch 6, bei dem dieses Verfahren der Flüssigchromatografie bei einem pH-Wert von 3 oder mehr durchgeführt wird.

## Revendications

1. L'utilisation d'un garnissage d'apatite pour chromatographie comprenant des particules ayant au moins sur leur surface une apatite contenant au moins un métal choisi parmi l'étain et le plomb.

2. L'utilisation selon la revendication 1, dans laquelle le diamètre moyen dudit garnissage est de 1 à 100 μm.

3. L'utilisation selon la revendication 1, dans laquelle les particules dudit garnissage sont entièrement formées de ladite apatite contenant au moins un métal choisi parmi l'étain et le plomb.

4. L'utilisation selon la revendication 1, dans laquelle ledit garnissage comprend des particules d'apatite ayant à leur surface ladite apatite contenant au moins un métal choisi parmi l'étain et le plomb.

5. L'utilisation selon la revendication 1, dans laquelle ledit garnissage comprend des particules de support inerte revêtues avec ladite apatite contenant au moins un métal choisi parmi l'étain et le plomb.

6. Un procédé pour chromatographie liquide comprenant les étapes suivantes :

(a) on garnit une colonne avec un garnissage d'apatite contenant au moins un métal choisi parmi l'étain et le plomb ;

(b) on met en contact ledit garnissage avec un échantillon comprenant au moins deux substances dissoutes ; et

(c) on met en contact ledit garnissage avec une phase mobile liquide pour séparer lesdites substances dissoutes par élution.

7. Un procédé pour chromatographie liquide selon la revendication 6, dans lequel lesdites substances dissoutes sont choisies parmi les protéines, les enzymes, les acides nucléiques et les glycosides.

8. Un procédé pour chromatographie liquide selon la revendication 6, dans lequel ledit procédé pour chromatographie liquide est mis en oeuvre à un pH de 3 ou plus.

Fig. 1A

Fig. 1B

Fig. 2A

Fig. 2B

Fig. 3B

Fig. 3A